# EUROPEAN PATENT APPLICATION

(11) **EP 2 703 080 A1**
(43) Date of publication of application: **05.03.2014**
(21) Application number: 12776113.8
(22) Date of filing: 24.04.2012
(51) Int. Cl.: B01J 27/195, B01D 53/94, F01N 3/02, F01N 3/023, F01N 3/035, F01N 3/10

(54) **MOLTEN SALT-TYPE OFF GAS PURIFICATION CATALYST AND OFF GAS PURIFICATION FILTER**

(30) Priority: 28.04.2011 JP 2011101093
(71) Applicant: Panasonic Corporation, Osaka 571-8501 (JP)
(72) Inventor: MIYAGAWA, Tatsurou, Osaka-shi Osaka 540-6207 (JP); NAKAJIMA, Takahiro, Osaka-shi Osaka 540-6207 (JP); KUBO, Masahiro, Osaka-shi Osaka 540-6207 (JP); KITAGAWA, Norikazu, Osaka-shi Osaka 540-6207 (JP); SUGA, Ryousuke, Osaka-shi Osaka 540-6207 (JP)
(74) Representative: Vigand, Philippe
(86) International application number: PCT/JP2012/002798
(87) International publication number: WO 2012/147333

(57) **Abstract**

A molten salt-type exhaust gas purification catalyst has, as a catalyst component, a first composite metal oxide of cesium and vanadium, and a sulfate containing cesium and an alkaline earth metal.

## Description

### TECHNICAL FIELD

The present invention relates to a molten salt-type exhaust gas purification catalyst and an exhaust gas purification filter.

### BACKGROUND ART

An exhaust gas purification catalyst promotes combustion of particulate matter contained in an exhaust gas of a diesel engine or the like. The diesel engine discharges the particulate matter (PM) made of carbon or the like. The PM is trapped by a diesel particulate filter (DPF) disposed in an exhaust gas passageway. The trapped PM is combusted and removed by raising an exhaust gas temperature periodically. In order to combust the PM, the temperature must be set to be 600°C or higher. For this reason, a catalyst is used so that the PM may be combusted at a lower temperature.

Currently, a platinum group metal such as platinum or palladium is widely used in the exhaust gas purification catalyst. This is because an exhaust gas purification catalyst of a platinum group metal has a good PM combustion performance and durability. However, the platinum group metal is rare and expensive. For this reason, in an automobile exhaust gas purification catalyst, researches on saved platinum group use and platinum group replacement are carried out all over the world (See Non-Patent Literature 1).

As an exhaust gas purification catalyst that uses no platinum group metal, there is a molten salt-type catalyst (or also referred to as molten mobile-type catalyst) made of an alkali metal or the like. The molten salt-type catalyst gets melted around a temperature of reaction with PM to assume a liquid phase. For this reason, it is considered that a contact between the catalyst and the PM outstandingly increases to improve the performance. Examples of the molten salt-type catalyst include a composite metal oxide of cesium (Cs) and vanadium (V) (hereafter referred to as CsV oxide). Among the CsV oxides that exist in a plurality, Cs₃VO₄ in particular is highly active to the PM (See Non-Patent Literature 2).

Also, there is a molten salt-type catalyst made of metal nitrate carried on a basic carrier (See Patent Literature 1).

It is reported that magnesia spinel and the like are preferable as the basic carrier; nitrate of an alkali metal or an alkaline earth metal is preferable as the metal nitrate; and LiNO₃ is the most preferable.

The molten salt-type catalyst exhibits a sufficient performance by being in a liquid phase, and there is a tendency such that, as the melting point is lower, the PM combustion temperature is lower. On the other hand, because the molten salt-type catalyst assumes a liquid phase, there are a fear of moving by being in contact with the exhaust gas and a fear of being evaporated. Then, as the melting point of the molten salt-type catalyst is lower, these fears are further more raised. Also, alkali metals often used in a molten salt-type catalyst have a larger vapor pressure among the metals, raising a fear of being evaporated. For example, the melting point of LiNO₃ is 261°C.

Therefore, such a conventional molten salt-type catalyst has had a disadvantage of being inferior in durability as compared with a platinum group metal catalyst.

### Citation List

### Patent Literature

PTL1: Japanese Patent No. 3821357

### Non-Patent Literature

NPTL1: "Reduction of Amount of Use of Platinum Group Metal of Exhaust Gas Purification Catalyst and Replacement Technique", Masaaki Haneda et al., Automobile Technique Vol. 63, pp. 42-47, 2009
NPTL2: "Cs-V catalysts for the combustion of diesel particulate", Debora Fino et al., Topics in Catalysis Vols. 30/31, pp. 251-255, 2004

### SUMMARY OF THE INVENTION

A molten salt-type exhaust gas purification catalyst of the present invention has, as a catalyst component, a first composite metal oxide of cesium and vanadium (CsV oxide), and a sulfate containing cesium and an alkaline earth metal.

Among the first composite metal oxides (CsV oxides) of cesium (Cs) and vanadium (V), a CsV oxide having a low melting point has a melting point of 400°C or lower. On the other hand, sulfates containing at least one of Cs and an alkaline earth metal all have a high melting point and, for example, the melting point of cesium sulfate (Cs₂SO₄) is 1010°C. When such a sulfate coexists with a CsV oxide, the sulfate and the CsV oxide forms a eutectic mixture, and the sulfate is melted at a temperature lower than an inherent temperature. However, the sulfate itself is inherently stable against heat, so that, by coexistence of the sulfate and the CsV oxide, movement and evaporation of the CsV oxide are suppressed. Also, when Cs in the CsV oxide is evaporated, it is considered that Cs is supplied to the CsV oxide side by the existence of the sulfate containing Cs in a neighborhood of the CsV oxide, so that an irreversible change of a crystal structure of the CsV oxide is suppressed. As a result of this, a molten salt-type exhaust gas purification catalyst with improved durability is provided.

### BRIEF DESCRIPTION OF DRAWINGS

FIG. 1 is a schematic view illustrating a surface of an exhaust gas purification filter of the first example of the present invention.
FIG. 2 is a graph showing a relationship between the number of heat load times and the PM combustion speed of the exhaust gas purification filter.
FIG. 3 is a graph showing an initial combustion start temperature and a deterioration width after a durability test of an exhaust gas purification catalyst of the second to fifth examples of the present invention.

### DESCRIPTION OF EMBODIMENTS

Hereafter, examples of the present invention will be described with reference to the drawings.

### (First example)

First step: A DPF made of SiC was impregnated with titania sol and, after drying, heating was carried out at 800°C to apply titanium dioxide (TiO₂) onto the DPF.

Second step: The DPF made of SiC was impregnated with an aqueous solution in which copper sulfate and vanadium oxide sulfate had been dissolved and, after drying, heating was carried out at 800°C to apply a second composite metal oxide of copper (Cu) and V (hereafter referred to as CuV oxide) onto TiO₂. The aqueous solution in which copper sulfate and vanadium oxide sulfate are dissolved may be prepared so that mainly CuV₂O₆ or Cu₂V₂O₇ may be produced. For example, the molar ratio of Cu and V may be within a range of Cu : V = 1 : 1 to 1 : 2.

Third step: The DPF made of SiC was impregnated with an aqueous solution in which Cs₂SO₄ and MgSO₄ had been dissolved and, after drying, heating was carried out at 800°C to apply sulfate of Cs and Mg onto the second composite metal oxide of Cu and V (CuV oxide). Also, in an area where the CuV oxide and the sulfate are in contact, CsV oxide is produced by heating. The aqueous solution in which Cs₂SO₄ and MgSO₄ are dissolved may be such that a sufficient amount of the sulfate of Cs and Mg is applied to the CuV oxide. For example, the molar ratio of V and Cs may be within a range of V : Cs = 1 : 1 to 1 : 2. Also, for example, the molar ratio of Mg and Cs may be within a range of Mg : Cs = 1 : 3 to 1 : 4.

By the above-described steps, a molten salt-type exhaust gas purification catalyst containing the first composite metal oxide of Cs and V (CsV oxide), sulfate containing Cs and Mg, and further the second composite metal oxide of Cu and V (CuV oxide) as a catalyst component was applied onto the DPF, whereby an exhaust gas purification filter of the first example was fabricated.

Here, in the second step, a CuV oxide mainly made of CuV₂O₆ and Cu₂V₂O₇ is produced.

Here, in the third step, a CsV oxide mainly made of Cs₂V₄O₁₁ is produced. The CsV oxide is produced in an area where the CuV oxide and the sulfate are in contact after impregnation of the third step, and therefore it is assumed in the present invention that the CsV oxide is formed as an intermediate layer.

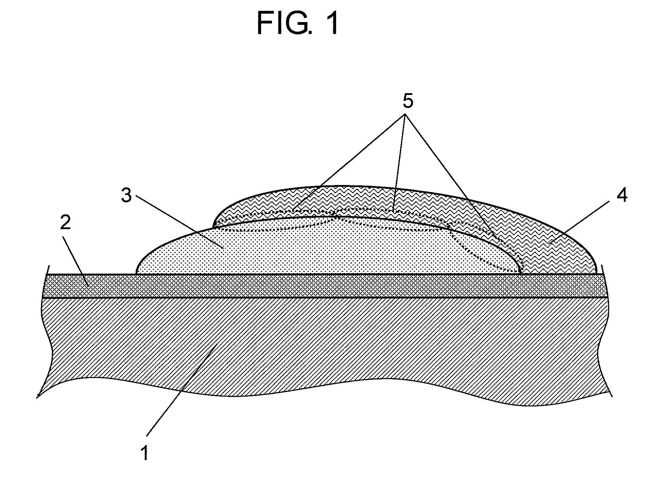

FIG. 1 is a schematic view illustrating a surface of an exhaust gas purification filter of the first example of the present invention, showing an appearance of the molten salt-type exhaust gas purification catalyst applied onto the DPF. In the first step, TiO₂ layer 2 is formed on DPF 1. In the second step, CuV oxide 3 is applied by superposition onto TiO₂ layer 2. In the third step, sulfate 4 is applied by superposition onto TiO₂ layer 2 and CuV oxide 3. At that time, CsV oxide is produced as intermediate layer 5 in an area shown by a broken line where CuV oxide 3 and sulfate 4 are in contact.

Here, in actual cases, the applied TiO₂ and catalyst component seldom form a uniform film and layer structure on DPF 1. Further, there are an overlapping part and a non-overlapping part as shown by CuV oxide 3 and sulfate 4 of FIG. 1.

### (First comparative example)

First step: A DPF made of SiC was impregnated with titania sol and, after drying, heating was carried out at 800°C to apply TiO₂ onto the DPF.

Second step: The DPF made of SiC was impregnated with an aqueous solution in which vanadium oxide sulfate and Cs₂SO₄ had been dissolved and, after drying, heating was carried out at 800°C to apply the CsV oxide and Cs₂SO₄ onto TiO₂. The aqueous solution in which vanadium oxide sulfate and Cs₂SO₄ are dissolved may be prepared so that Cs₂SO₄ may remain after V and Cs are combined to produce a CsV oxide (mainly Cs₂V₄O₁₁). For example, the molar ratio of V and Cs may be within a range of V: Cs - 1 : 1 to 1 :2.

By the above-described steps, an exhaust gas purification catalyst containing the first composite metal oxide of Cs and V (CsV oxide) and Cs₂SO₄ was applied onto the DPF, whereby an exhaust gas purification filter of the first comparative example was fabricated.

### (First evaluation example)

A certain amount of PM was deposited on the DPF of the first example or the first comparative example, and these DPFs were placed in an exhaust gas passageway of a diesel engine using an engine bench test apparatus. The exhaust gas temperature was controlled to be 500°C for 15 minutes, so as to combust the deposited PM. By measurement of the weight of each DPF before and after the test, the weight of the combusted PM was calculated. The weight of the combusted PM was divided by the combustion time of 15 minutes to calculate a PM combustion speed (g/min), and this was regarded as an index of the PM combustion performance of the DPF.

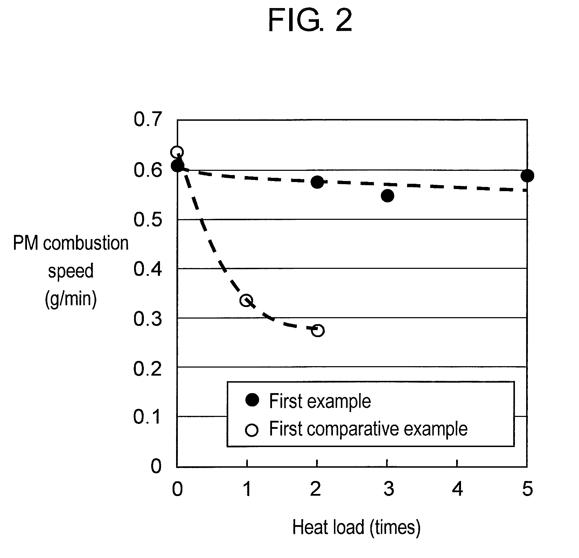

Next, each PDF was repetitively exposed to a high-temperature exhaust gas by using an engine bench test apparatus. The PM combustion speed was calculated by the above-described method for each time of the exposure (heat load) to the high-temperature exhaust gas, so as to confirm the performance of the DPF. The result thereof is shown in FIG. 2 which is a graph showing a relationship between the number of heat load times and the PM combustion speed of the first example of the present invention.

In the first comparative example, the PM combustion speed decreased to a considerable extent by the heat load of two times, whereby decrease in the performance was confirmed. On the other hand, in the first example, the combustion speed changed little even when the heat load was repetitively given, so that the DPF was confirmed to have a high durability. This seems to be due to the following reason. Because Cs₂SO₄ and MgSO₄ which are stable against heat coexisted with Cs₂V₄O₁₁ constituting the main active species, the movement and evaporation as well as destruction of the crystal structure of Cs₂V₄O₁₁ were suppressed. Also, the coexistence of the CuV oxide which is insoluble to water and comparatively stable against heat seems to have contributed to the improvement in durability.

Here, in the first example, a molten salt-type exhaust gas purification catalyst was applied onto DPF 1 by using an aqueous solution in which Cs and V had been dissolved. Alternatively, however, after a catalyst powder in which a catalyst component is carried on a carrier material in advance is fabricated, a molten salt-type exhaust gas purification catalyst may be applied onto DPF 1 by using a slurry in which the catalyst powder is dispersed. At that time, when TiO₂ is used as a carrier, TiO₂ does not react with the catalyst component. For this reason, by using TiO₂, unintended by-products are not produced, and the catalyst activity is not decreased, so that it is preferable.

Also, it seems that, because the molten salt-type exhaust gas purification catalyst of the present invention is carried on a catalyst carrier having a high specific surface area, the fine undulation of the catalyst carrier suppresses unintended movement of the catalyst brought into a liquid phase. As TiO₂ having a high specific surface area, anatase-type TiO₂ having a specific surface area of about 300 m²/g, for example, is commercially available for a photocatalyst.

Also, with regard to the amount carried on TiO₂, it is preferable that the weight of the molten salt-type exhaust gas purification catalyst is more than 1 wt% and is 100 wt% or less, more preferably about 50 wt%, relative to the weight of TiO₂. It seems that, when the carried amount of the molten salt-type exhaust gas purification catalyst is more than 100 wt%, preparation itself of the catalyst powder thereof will be difficult, and also the catalyst powder completely covers the fine structure of TiO₂, so that the effect of suppressing outflow of the catalyst will be small. Conversely, it seems that, when the carried amount of the molten salt-type exhaust gas purification catalyst is 1 wt% or less, the efficiency of contact between the molten salt-type exhaust gas purification catalyst and the PM decreases, whereby the PM combustion performance cannot be sufficiently exhibited.

As the carrier, a basic carrier such as magnesium oxide, magnesium aluminum oxide, or zirconium dioxide may be used besides TiO₂. It seems that, by being carried on a basic carrier, the molten salt-type exhaust gas purification catalyst of the present invention continues to be held on the carrier by interaction of the catalyst with the basic carrier even when the catalyst assumes a liquid phase. Therefore, unintended movement of the molten salt-type exhaust gas purification catalyst is suppressed.

Also, only in a case in which a DPF made of SiC is used as the exhaust gas purification filter, SiO₂ may be used as the carrier. SiC has fewer sites to which the applied catalyst is chemically bonded, so that the bonding force between the catalyst layer and the filter base material is smaller. Therefore, when an exhaust gas of a high temperature and a large flow rate is passed, there is a fear of exfoliation of the catalyst layer. When SiO₂ is used as the catalyst carrier, a carrier layer having a high dispersion and being hardly exfoliated is formed because SiO₂ and the SiC surface have affinity with each other. As a result of this, exfoliation of the catalyst layer is suppressed. The amount of the molten salt-type exhaust gas purification catalyst carried on SiO₂ may be more than 1 wt% and may be 100 wt% or less in the same manner as described above.

### (Second example)

A TiO₂ powder was dispersed into an aqueous solution in which copper sulfate, vanadium oxide sulfate, Cs₂SO₄, and MgSO₄ had been dissolved, so as to prepare a slurry. The slurry was heated while being stirred, and was solidified by evaporation to obtain a dried powder. The dried powder was heated at 800°C to prepare a molten salt-type exhaust gas purification catalyst of the second example.

The molten salt-type exhaust gas purification catalyst of the second example is mainly made of Cs₂V₄O₁₁, Cs₂CuV₄O₁₂, Cs₂SO₄, and MgSO₄. The carried amount of the molten salt-type exhaust gas purification catalyst is 60 wt% relative to the weight of TiO₂.

Here, the aqueous solution in which copper sulfate, vanadium oxide sulfate, Cs₂SO₄, and MgSO₄ are dissolved may be prepared so as to attain the construction and the carried amount described above.

### (Third example)

A TiO₂ powder was dispersed into an aqueous solution in which copper sulfate, vanadium oxide sulfate, and Cs₂SO₄ had been dissolved, so as to prepare a slurry. The slurry was heated while being stirred, and was solidified by evaporation to obtain a dried powder. To the dried powder, calcium sulfate (CaS04) was added, and the resultant was crushed and mixed by using a mortar. Subsequently, the powder after mixing CaS04 was heated at 800°C to prepare a molten salt-type exhaust gas purification catalyst of the third example.

The molten salt-type exhaust gas purification catalyst of the third example is mainly made of Cs₂V₄O₁₁, Cs₂CuV₄O₁₂, Cs₂SO₄, and CaSO₄. The carried amount of the molten salt-type exhaust gas purification catalyst is 60 wt% relative to the weight of TiO₂.

Here, the aqueous solution in which copper sulfate, vanadium oxide sulfate, and Cs₂SO₄ are dissolved may be prepared so as to attain the construction and the carried amount described above.

### (Fourth example)

A molten salt-type exhaust gas purification catalyst of the fourth example was prepared in the same manner as in the third example except that CaS04 was changed to strontium sulfate (SrS04).

The molten salt-type exhaust gas purification catalyst of the fourth example is mainly made of Cs₂V₄O₁₁, Cs₂CuV₄O₁₂, Cs₂SO₄, and SrSO₄. The carried amount of the molten salt-type exhaust gas purification catalyst is 60 wt% relative to the weight of TiO₂.

### (Fifth example)

A molten salt-type exhaust gas purification catalyst of the fifth example was prepared in the same manner as in the third example except that CaSO₄ was changed to barium sulfate (BaS04).

The molten salt-type exhaust gas purification catalyst of the fifth example is mainly made of Cs₂V₄O₁₁, Cs₂CuV₄O₁₂, Cs₂SO₄, and BaSO₄. The carried amount of the molten salt-type exhaust gas purification catalyst is 60 wt% relative to the weight of TiO₂.

### (Second evaluation example)

The molten salt-type exhaust gas purification catalyst of the second to fifth examples was mixed with activated carbon functioning as a simulant PM, and was heated to raise the temperature in ambient air atmosphere to examine the combustion start temperature by using a thermogravimetric / differential thermal analysis apparatus. In accordance with a rise in temperature, the activated carbon is combusted to decrease its weight; however, the temperature of combustion differs depending on the catalytic function of the coexistent molten salt-type exhaust gas purification catalyst. Here, the temperature at which 10% of the weight of the activated carbon is combusted and removed is defined as a start temperature of the catalyst combustion, and it has been assumed that, as this temperature is lower, the PM combustion performance is higher.

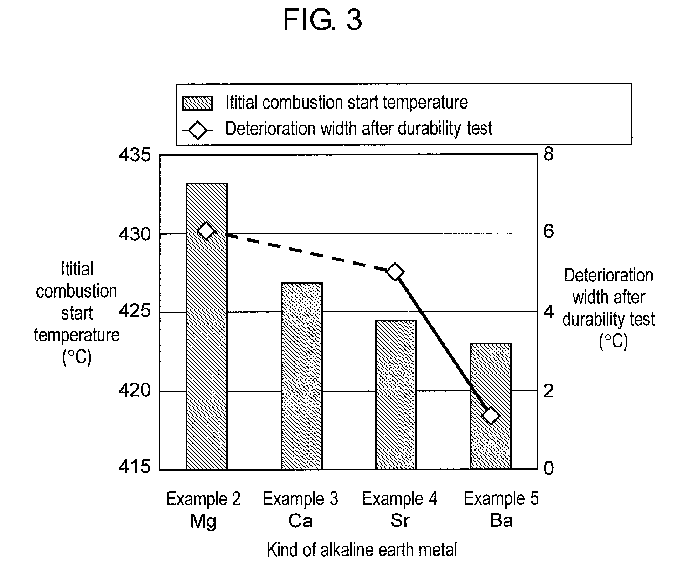

Next, a durability test was carried out by using the molten salt-type exhaust gas purification catalyst of the second to fifth examples. In the durability test, the catalyst powder was exposed to a humidified air of 800°C for 40 hours. After the durability test, the combustion start temperature was measured by the aforementioned method. The difference between the initial combustion start temperature and the combustion start temperature after the durability test was defined as a deterioration width, and it was assumed that, as the deterioration width is smaller, the durability is higher. The result thereof is shown in FIG. 3 which is a graph showing the initial combustion start temperature and the deterioration width after the durability test of the exhaust gas purification catalyst of the second to fifth examples.

The initial combustion start temperature lowers in the order of the second example (Mg), the third example (Ca), the fourth example (Sr), and the fifth example (Ba). It was found out that, when BaSO₄ is used as the alkaline earth metal sulfate that is allowed to coexist, the PM combustion performance is particularly high. This order coincides with the order of elements in the Periodic Table. Also, a similar tendency was seen in the deterioration width after the durability test, and it was found out that, when BaS04 is used, the deterioration width is particularly small to give a high durability.

As described above, MgSO₄ is readily soluble in water, and a mixed aqueous solution of Cs₂SO₄ and MgSO₄ can be prepared in almost any ratio. Further, a mixed aqueous solution of high concentration can be prepared with the salts of Cu and V which are other catalyst components. Therefore, the step in which the molten salt-type exhaust gas purification catalyst is actually prepared and the production step in which the exhaust gas purification filter is coated with the molten salt-type exhaust gas purification catalyst are facilitated. On the other hand, BaSO₄ is hardly soluble in water, acid, alkali, and organic solvents, so that the difficulty in production increases; however, the durability in particular is improved as compared with other alkaline earth metal sulfates. Therefore, the construction of the fifth example is effective when the exhaust gas temperature becomes particularly high.

In this manner, the molten salt-type exhaust gas purification catalyst of the present invention has, as a catalyst component, a first composite metal oxide of cesium and vanadium (CsV oxide), and a sulfate containing cesium and an alkaline earth metal.

The first composite metal oxide of Cs and V (CsV oxide) is a molten salt-type exhaust gas purification catalyst, and a CsV oxide having a low melting point has a melting point of 400°C or lower. On the other hand, sulfates containing at least one of Cs and an alkaline earth metal all have a high melting point and, for example, the melting point of cesium sulfate (Cs₂SO₄) is 1010°C. When such a sulfate coexists with a CsV oxide, the sulfate and the CsV oxide forms a eutectic mixture, and the sulfate is melted at a temperature lower than an inherent temperature. However, the sulfate itself is inherently stable against heat, so that, by coexistence of the sulfate and the CsV oxide, movement and evaporation of the CsV oxide are suppressed. Also, when Cs in the CsV oxide is evaporated, it is considered that Cs is supplied to the CsV oxide side by the existence of the sulfate containing Cs in a neighborhood of the CsV oxide, so that an irreversible change of the crystal structure of the CsV oxide is suppressed. This allows that a molten salt-type exhaust gas purification catalyst with improved durability is provided.

Here, as the CsV oxide, Cs₂V₄O₁₁, Cs₂CuV₄O₁₂, CsVO₃, and Cs₃VO₄ can be used.

Also, the function of each component in the catalyst is inferred to be as follows. The CsV oxide supplies oxygen to PM to combust the PM. The sulfate containing Cs and the alkaline earth metal stabilizes the whole of the catalyst. Also, Cs in the sulfate has a high affinity to the PM and activates the PM to bring the PM into a state of being readily combustible.

Also, the molten salt-type exhaust gas purification catalyst of the present invention may further have an oxide of copper as the catalyst component. Also, the oxide of copper may be a second composite metal oxide of copper and vanadium.

In the same manner as the CsV oxide, the second composite metal oxide of copper (Cu) and V (CuV oxide) plays a role of supplying oxygen to the PM; however, the CuV oxide has a higher melting point than the CsV oxide and is thermally more stable. Also, unlike some sulfates, the CuV oxide is insoluble in water. Therefore, by coexistence of the CuV oxide with other components of the catalyst, the thermal stability of the catalyst as a whole is improved. This allows that a molten salt-type exhaust gas purification catalyst with improved durability is provided.

Also, in the molten salt-type exhaust gas purification catalyst of the present invention, the oxide of copper may be a third composite metal oxide of copper, vanadium, and cesium.

In the same manner as the CsV oxide, the third composite metal oxide of Cu, V, and Cs (hereafter referred to as CsCuV oxide) plays a role of supplying oxygen to the PM; however, the CsCuV oxide seems to be thermally more stable than the CsV oxide. Therefore, by coexistence of the CsCuV oxide with other components of the catalyst, the thermal stability of the catalyst as a whole is improved. This allows that a molten salt-type exhaust gas purification catalyst with improved durability is provided.

Also, in the molten salt-type exhaust gas purification catalyst of the present invention, a second layer made of a sulfate containing cesium and an alkaline earth metal is superposed on a first layer made of the second composite metal oxide (CuV oxide). Further, an intermediate layer made of the first composite metal oxide (CsV oxide) and a fourth composite metal oxide of cesium, an alkaline earth metal, and vanadium may be formed in a region where the first layer and the second layer are in contact.

Also, in the molten salt-type exhaust gas purification catalyst of the present invention, the second layer may be superposed on the first layer described above, and an intermediate layer made of the first composite metal oxide (CsV oxide) or the fourth composite metal oxide may be formed in a region where the first layer and the second layer are in contact.

In the molten salt-type exhaust gas purification catalyst of the present invention, the component (main active component) that contributes most to supplying oxygen to the PM to combust the PM is the CsV oxide or the fourth composite metal oxide. On the other hand, these components have the lowest melting point among the compounds constituting the molten salt-type exhaust gas purification catalyst. By allowing the molten salt-type exhaust gas purification catalyst to have the above-described construction, the main active component is carried on the CuV oxide, so that the movement thereof seems to be suppressed by interaction with the CuV oxide even when melted. Also, it seems that, by allowing the molten salt-type exhaust gas purification catalyst to carry the sulfate in addition to the main active component, the main active component having a low melting point is partially covered with the sulfate having a high melting point, whereby the movement and evaporation are suppressed. This allows that a molten salt-type exhaust gas purification catalyst with improved durability is provided.

Also, in the molten salt-type exhaust gas purification catalyst of the present invention, the first composite metal oxide (CsV oxide) may be Cs₂V₄O₁₁.

Though having a low melting point (446°C) among a variety of CsV oxides, Cs₂V₄O₁₁ can stably exist even when exposed to a high temperature of 800°C or more in the coexistence of the sulfate containing Cs and the alkaline earth metal. At the same time, Cs₂V₄O₁₁ exhibits a high oxygen supplying capability to the PM even in the coexistence of the sulfate and can exhibit a sufficient PM combustion performance. This allows that a molten salt-type exhaust gas purification catalyst with improved durability is provided.

Also, in the molten salt-type exhaust gas purification catalyst of the present invention, the second composite metal oxide (CuV oxide) may contain at least one of CuV₂O₆ and Cu₂V₂O₇.

Among a variety of CuV oxides, CuV₂O₆ and Cu₂V₂O₇ have a high thermal stability and are suitable as the CuV oxide. This allows that a molten salt-type exhaust gas purification catalyst with improved durability is provided.

Also, in the molten salt-type exhaust gas purification catalyst of the present invention, the third composite metal oxide (CsCuV oxide) may be Cs₂CuV₄O₁₂.

As described above, Cs₂V₄O₁₁ can stably exist even when exposed to a high temperature of 800°C or more in the coexistence of the sulfate containing Cs and the alkaline earth metal. At the same time, Cs₂V₄O₁₁ exhibits a high oxygen supplying capability to the PM even in the coexistence of the sulfate and can exhibit a sufficient PM combustion performance. It seems that, by introducing copper oxide (CuO) into Cs₂V₄O₁₁ to form Cs₂CuV₄O₁₂, the thermal stability is further more improved, and the PM combustion performance is also improved. This allows that a molten salt-type exhaust gas purification catalyst with improved durability is provided.

Here, Cs₂CuV₄O₁₂ can be expressed as Cs₂Cu(VO₃)₄ or Cs₂V₄O₁₁·CuO or the like; however, these represent the same substance.

Also, in the molten salt-type exhaust gas purification catalyst of the present invention, the alkaline earth metal may be magnesium.

MgSO₄ is readily soluble in water, and a mixed aqueous solution of Cs₂SO₄ and MgSO₄ is fabricated in almost any ratio. Further, with MgSO₄, a mixed aqueous solution of high concentration can be prepared with the salt of Cu and V of other catalyst components. Therefore, the time at which the molten salt-type exhaust gas purification catalyst is prepared and the production step in which the exhaust gas purification filter is coated with the molten salt-type exhaust gas purification catalyst are facilitated. Also, MgSO₄ has an extremely high melting point of 1185°C and is suitable as the alkaline earth metal sulfate. Mg in the catalyst mainly exists as MgSO₄ or as a composite sulfate of Cs and Mg. Also, Mg may be introduced into the CsV oxide. This allows that a molten salt-type exhaust gas purification catalyst with improved durability is provided.

Also, in the molten salt-type exhaust gas purification catalyst of the present invention, the alkaline earth metal may be barium.

BaS04 is chemically stable and is hardly soluble in water, acid, alkali, and organic solvents. A large amount of water and various gas components are contained in an engine exhaust gas; however, the effect of these is extremely small. Also, BaS04 has an extremely high melting point of 1600°C and is suitable as the alkaline earth metal sulfate. Ba in the catalyst mainly exists as BaS04 or as a composite sulfate of Cs and Ba. Also, Ba may be introduced into the CsV oxide. This allows that a molten salt-type exhaust gas purification catalyst with improved durability is provided.

Also, the molten salt-type exhaust gas purification catalyst of the present invention may be carried on titanium dioxide and may be more than 1 wt% and 100 wt% or less of the weight of titanium dioxide.

It seems that, with the molten salt-type exhaust gas purification catalyst of the present invention, unlike the platinum group metal catalysts and other solid oxide catalysts, the surface area of the carrier and the fine undulation structure of the surface do not greatly affect the PM combustion performance.

However, it seems that, because the catalyst carrier having a high specific surface area carries the molten salt-type exhaust gas purification catalyst of the present invention, the fine undulation of the carrier suppresses unintended movement of the catalyst brought into a liquid phase. In particular, because titanium dioxide (TiO₂) does not react with the components of the molten salt-type exhaust gas purification catalyst of the present invention, unintended by-products are not produced, and the catalyst activity is not decreased, so that it is preferable.

It seems that, when the carried amount of the molten salt-type exhaust gas purification catalyst is more than 100 wt% of TiO₂, the catalyst completely covers the fine structure of the carrier, so that the effect of suppressing outflow of the catalyst will be small. Conversely, it seems that, when the carried amount of the molten salt-type exhaust gas purification catalyst is 1 wt% or less of TiO₂, the efficiency of contact with the PM decreases, whereby the PM combustion performance cannot be sufficiently exhibited. Therefore, the carried amount of the molten salt-type exhaust gas purification catalyst is preferably more than 1 wt% and 100 wt% or less, more preferably about 50 wt% (from 40 wt% to 60 wt%), of the weight of TiO₂. This allows that a molten salt-type exhaust gas purification catalyst with improved durability is provided.

Also, the molten salt-type exhaust gas purification catalyst of the present invention may be carried on a basic carrier. Further, the basic carrier may contain at least one of magnesium oxide, magnesium aluminum oxide, and zirconium dioxide.

It seems that, when the molten salt-type exhaust gas purification catalyst of the present invention is carried on a basic carrier, the catalyst continues to be held on the basic carrier by interaction of the catalyst with the basic carrier even when the catalyst assumes a liquid phase. Therefore, unintended movement of the molten salt-type exhaust gas purification catalyst is suppressed. This allows that a molten salt-type exhaust gas purification catalyst with improved durability is provided.

Here, magnesium aluminum oxide is represented by the molecular formula of Al₂MgO₄ or Mg(AlO₂)₂ and is referred to also as aluminum magnesium oxide, dialuminum magnesium tetraoxide, or the like.

Also, the exhaust gas purification filter of the present invention may be fabricated in such a manner that the molten salt-type exhaust gas purification catalyst described above is applied to a filter of ceramic or metal.

When the molten salt-type exhaust gas purification catalyst of the present invention is used, the catalyst is applied onto a heat-resistant filter made of ceramic or metal and is placed in an exhaust gas passageway. In particular, the catalyst is often applied onto a DPF made of SiC or cordierite. This allows that an exhaust gas purification filter coated with a molten salt-type exhaust gas purification catalyst with improved durability is provided.

Also, the exhaust gas purification filter of the present invention may be fabricated in such a manner that the molten salt-type exhaust gas purification catalyst is carried on silicon dioxide, is more than 1 wt% and 100 wt% or less relative to the weight of silicon dioxide, and is applied to a DPF made of SiC.

In particular, in diesel passenger vehicles and the like, a DPF made of SiC is often adopted. However, as compared with cordierite, SiC has fewer sites (for example, oxygen or the like on the filter surface) to which the applied catalyst is chemically bonded, so that the bonding force between the catalyst layer and the filter base material is smaller. Therefore, when an exhaust gas of a high temperature and a large flow rate is passed, there is a fear of exfoliation of the catalyst layer. When silicon dioxide (SiO₂) is used as the catalyst carrier, a carrier layer having a high dispersion and being hardly exfoliated is formed because SiO₂ and the SiC surface have affinity with each other. As a result of this, exfoliation of the catalyst layer is suppressed.

This allows that an exhaust gas purification filter coated with a molten salt-type exhaust gas purification catalyst with improved durability is provided.

### INDUSTRIAL APPLICABILITY

The molten salt-type exhaust gas purification catalyst and the exhaust gas purification filter of the present invention do not use a platinum group metal and provide an improved durability as compared with conventional molten salt-type catalysts, thereby being useful as a catalyst DPF or the like that purifies an exhaust gas from a diesel engine.

### REFERENCE MARKS IN THE DRAWINGS

- 1: DPF
- 2: TiO₂ layer
- 3: CuV oxide
- 4: sulfate
- 5: intermediate layer

## Claims

1. A molten salt-type exhaust gas purification catalyst comprising as a catalyst component, a first composite metal oxide of cesium and vanadium, and a sulfate containing cesium and an alkaline earth metal.

2. The molten salt-type exhaust gas purification catalyst according to claim 1 further comprising an oxide of copper as the catalyst component.

3. The molten salt-type exhaust gas purification catalyst according to claim 2, wherein the oxide of copper is a second composite metal oxide of copper and vanadium.

4. The molten salt-type exhaust gas purification catalyst according to claim 2, wherein the oxide of copper is a third composite metal oxide of copper, vanadium, and cesium.

5. The molten salt-type exhaust gas purification catalyst according to claim 3, wherein on a first layer made of the second composite metal oxide, a second layer made of the sulfate containing cesium and an alkaline earth metal is superposed, and
an intermediate layer made of the first composite metal oxide and a fourth composite metal oxide of cesium, an alkaline earth metal and vanadium is formed in a region where the first layer and the second layer are in contact.

6. The molten salt-type exhaust gas purification catalyst according to claim 3, wherein a second layer made of the sulfate containing cesium and an alkaline earth metal is superposed on a first layer made of the second composite metal oxide, and
an intermediate layer made of the first composite metal oxide or a fourth composite metal oxide of cesium, an alkaline earth metal and vanadium is formed in a region where the first layer and the second layer are in contact.

7. The molten salt-type exhaust gas purification catalyst according to claim 1, wherein the first composite metal oxide is Cs₂V₄O₁₁.

8. The molten salt-type exhaust gas purification catalyst according to claim 3, wherein the second composite metal oxide contains at least one of CuV₂O₆ and Cu₂V₂O₇.

9. The molten salt-type exhaust gas purification catalyst according to claim 4, wherein the third composite metal oxide is Cs₂CuV₄O₁₂.

10. The molten salt-type exhaust gas purification catalyst according to claim 1, wherein the alkaline earth metal is magnesium.

11. The molten salt-type exhaust gas purification catalyst according to claim 1, wherein the alkaline earth metal is barium.

12. The molten salt-type exhaust gas purification catalyst according to any one of claims 1 to 11 being carried on titanium dioxide and being more than 1 wt% and 100 wt% or less of the titanium dioxide.

13. The molten salt-type exhaust gas purification catalyst according to any one of claims 1 to 11 being carried on a basic carrier.

14. The molten salt-type exhaust gas purification catalyst according to claim 13, wherein the basic carrier contains at least one of magnesium oxide, magnesium aluminum oxide, and zirconium dioxide.

15. An exhaust gas purification filter, wherein the molten salt-type exhaust gas purification catalyst according to any one of claims 1 to 11 is applied to a filter of ceramic or metal.

16. An exhaust gas purification filter, wherein the molten salt-type exhaust gas purification catalyst according to any one of claims 1 to 11 is carried on silicon dioxide, and the exhaust gas purification catalyst being more than 1 wt% and 100 wt% or less of the silicon dioxide is applied to a diesel particulate filter made of SiC.
